# FASCICULE DE BREVET EUROPEEN

(11) **EP 3 528 678 B1**
(45) Date de publication et mention de la délivrance du brevet: **08.09.2021**
(21) Numéro de dépôt: 17797694.1
(22) Date de dépôt: 23.10.2017
(51) Int. Cl.: A47J 43/07, A47J 43/08, A47J 27/16, A47J 43/044

(54) **APPAREIL ÉLECTROMÉNAGER DE PRÉPARATION CULINAIRE CHAUFFANT COMPORTANT UN PANIER VAPEUR**
ELEKTRISCHE HAUSHALTSAUFWÄRMVORRICHTUNG ZUR ZUBEREITUNG VON LEBENSMITTELN MIT EINEM DAMPFKORB
ELECTRICAL HOUSEHOLD HEATING FOOD-PREPARATION APPLIANCE COMPRISING A STEAMER BASKET

(30) Priorité: 24.10.2016 FR 1660297
(43) Date de publication de la demande: 28.08.2019
(73) Titulaire: SEB S.A., 69130 Ecully (FR)
(72) Inventeur: SMIT, Robert, 65290 Louey (FR); CHARLES, Patrick, 65290 Louey (FR); PAUMARD, Jonathan, 53470 Martigne sur Mayenne (FR)
(74) Mandataire: SEB Développement
(86) Numéro de dépôt international: PCT/FR2017/052912
(87) Numéro de publication internationale: WO 2018/078265

(56) Documents cités:
- WO-A1-01/03559
- WO-A1-2014/087077
- WO-A1-2016/041912
- CN-U- 202 341 751
- GB-A- 2 449 870
- GB-A- 2 517 456

## Description

La présente invention concerne le domaine technique des appareils électroménagers de préparation culinaire chauffants comportant un récipient de travail, un panier vapeur disposé dans le récipient de travail, un moyeu entraîné en rotation dans le récipient de travail, et au moins deux outils de travail interchangeables.

La présente invention concerne plus particulièrement, mais non exclusivement, les appareils électroménagers de préparation culinaire chauffants comportant un boîtier motorisé supérieur disposé au dessus du récipient de travail pour entraîner en rotation le moyeu portant un des outils de travail interchangeables.

Il est connu du document WO2014087077 un appareil électroménager de préparation culinaire chauffant comportant un panier vapeur disposé dans un récipient de travail, un moyeu disposé sur le fond du récipient de travail, un dispositif d'entraînement pour entraîner en rotation le moyeu disposé dans le récipient de travail. Le moyeu comporte une portion d'entraînement prévue pour entraîner en rotation un outil coupant disposé sous le panier vapeur. L'appareil comporte un outil émulsionneur pouvant être monté sur le moyeu à la place de l'outil coupant. Toutefois ce document ne mentionne pas de rangement pour l'outil émulsionneur.

Le document WO2016041912 divulgue un appareil selon le préambule de la revendication 1.

Un objet de la présente invention est d'assurer un rangement compact des accessoires de l'appareil avec une construction économique.

Cet objet est atteint avec un appareil électroménager de préparation culinaire chauffant comportant une partie supérieure, un récipient de travail, un dispositif de chauffe électrique pour chauffer les aliments contenus dans le récipient de travail, un panier vapeur disposé dans le récipient de travail, un moyeu, un dispositif d'entraînement pour entraîner en rotation le moyeu disposé dans le récipient de travail selon un axe de rotation, au moins deux outils de travail rotatifs, le moyeu comportant une portion d'entraînement prévue pour entraîner en rotation l'un des outils de travail rotatifs monté sur le moyeu sous le panier vapeur, le moyeu traversant le panier vapeur, le moyeu présentant une portion de réception s'étendant à l'intérieur du panier vapeur, au moins un autre des outils de travail rotatifs pouvant être monté sur la portion de réception lorsque la partie supérieure ferme le récipient de travail, du fait que lesdits au moins deux outils de travail rotatifs sont interchangeables, et que la portion de réception est dépourvue d'organe d'entraînement susceptible d'entraîner en rotation ledit outil de travail rotatif.

Ces dispositions permettent d'obtenir un appareil électroménager de préparation culinaire chauffant comportant un panier vapeur logé dans le récipient de travail, qui présente une configuration de rangement logeant au moins deux outils de travail rotatifs dans le récipient de travail. Ces dispositions permettent aussi d'éviter que le dispositif d'entraînement soit sursollicité si plusieurs outils de travail rotatifs sont montés sur le moyeu.

Avantageusement alors, la portion de réception est une portion cylindrique.

Une telle construction permet d'éviter l'entraînement en rotation de l'outil de travail rotatif monté sur la portion de réception. Une telle construction permet également d'éviter l'entraînement en rotation du panier vapeur.

Avantageusement encore, le moyeu présente un corps principal comportant la portion d'entraînement.

Cette disposition permet de simplifier la construction du moyeu.

Avantageusement alors, le moyeu présente une partie circonférentielle surmoulée autour du corps principal au dessus de la portion d'entraînement.

Cette disposition permet d'obtenir un état de surface plus lisse pour la partie circonférentielle et/ou d'utiliser un matériau moins favorable à l'accrochage des aliments.

Avantageusement alors, la partie circonférentielle forme la portion cylindrique.

Avantageusement encore, plusieurs outils de travail rotatifs sont montés superposés dans le panier vapeur sur la portion de réception lorsque la partie supérieure ferme le récipient de travail.

Cette disposition permet d'obtenir un appareil présentant une configuration de rangement logeant au moins trois outils de travail rotatifs dans le récipient de travail.

Avantageusement alors, la portion de réception est dépourvue d'organe d'entraînement susceptible d'entraîner en rotation lesdits outils de travail rotatifs.

Cette disposition permet d'éviter que le dispositif d'entraînement soit sursollicité si plusieurs outils de travail rotatifs sont montés sur la portion de réception du moyeu.

Selon une forme de réalisation, la partie supérieure comporte un boîtier motorisé supérieur disposé sur le récipient de travail pour entraîner en rotation le moyeu selon l'axe de rotation. En alternative, l'appareil électroménager de préparation culinaire chauffant pourrait notamment comporter une base motorisée recevant le récipient de travail pour entraîner en rotation le moyeu selon l'axe de rotation. La partie supérieure peut alors être notamment formée par un couvercle.

Avantageusement alors, la partie supérieure comporte un couvercle intermédiaire, et le récipient de travail porte le couvercle intermédiaire.

Cette disposition permet de protéger le boîtier motorisé supérieur des projections d'aliments.

Avantageusement alors, le couvercle intermédiaire porte un organe de transmission rotatif entraîné en rotation par le boîtier motorisé supérieur et entraînant en rotation le moyeu.

Avantageusement encore, le récipient de travail présente un fond et comporte un organe de centrage s'élevant à partir du fond, et le moyeu est monté sur l'organe de centrage.

Selon une forme de réalisation, l'appareil électroménager de préparation culinaire chauffant comporte une base recevant le récipient de travail.

Avantageusement alors, le dispositif de chauffe électrique est porté par le récipient de travail et la base comporte un connecteur électrique de chauffe (15) pour alimenter électriquement le dispositif de chauffe électrique lorsque le récipient de travail est disposé sur la base.

Cette disposition permet de faciliter le contrôle du dispositif de chauffe électrique.

En alternative, le dispositif de chauffe électrique pourrait notamment être porté par la base.

Avantageusement encore, la base comporte un montant présentant un connecteur électrique de motorisation pour alimenter électriquement le boîtier motorisé supérieur.

Cette disposition permet de simplifier l'alimentation électrique de l'appareil, qui peut être entièrement réalisée à partir de la base.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager de préparation culinaire selon l'invention,
- la figure 2 est une vue en coupe verticale de l'appareil électroménager de préparation culinaire illustré sur la figure 1, dans une configuration d'utilisation, la base n'étant pas représentée,
- la figure 3 est une vue en perspective de dessus de la base de l'appareil électroménager de préparation culinaire illustré sur la figure 1,
- la figure 4 est une vue en perspective de dessous du récipient de travail de l'appareil électroménager de préparation culinaire illustré sur la figure 1,
- la figure 5 est une vue en perspective du moyeu de l'appareil électroménager de préparation culinaire illustré sur la figure 1,
- la figure 6 est une vue en perspective d'un des outils de travail rotatifs de l'appareil électroménager de préparation culinaire illustré sur la figure 1,
- la figure 7 est une vue en perspective d'un panier vapeur de l'appareil électroménager de préparation culinaire illustré sur la figure 1,
- la figure 8 est une vue en coupe verticale de l'appareil électroménager de préparation culinaire illustré sur la figure 1, dans une configuration de rangement.

L'appareil électroménager de préparation culinaire chauffant illustré sur les figures comporte une partie supérieure 7, un récipient de travail 2, un dispositif de chauffe électrique 6 pour chauffer les aliments contenus dans le récipient de travail 2, ainsi que des accessoires de préparation 5. Les accessoires de préparation 5 comprennent un panier vapeur 50, un moyeu 51, et au moins deux outils de travail rotatifs 52 interchangeables, chacun des outils de travail rotatifs 52 interchangeables étant prévu pour être monté sur le moyeu 51.

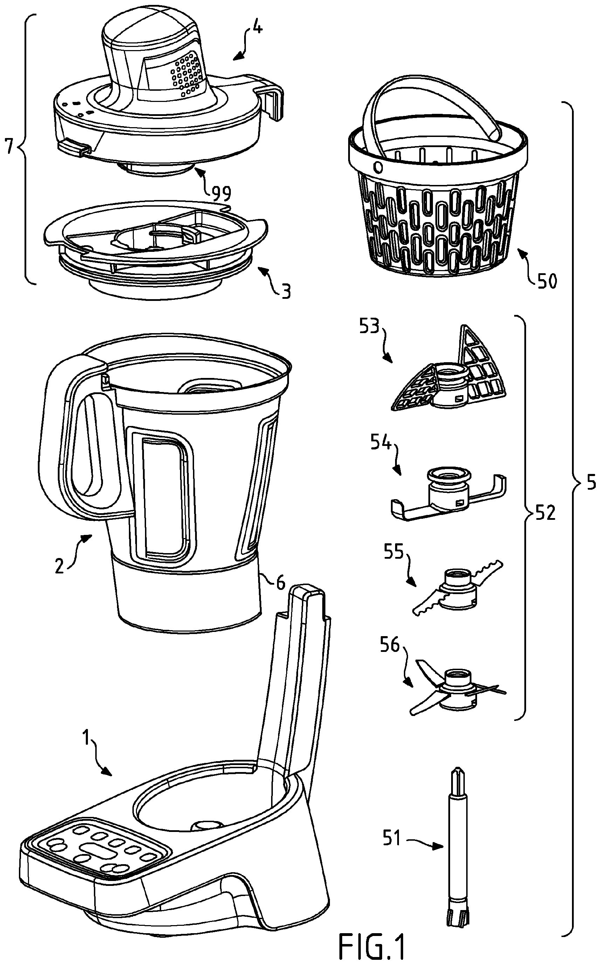

Tel que visible sur la figure 1, les outils de travail rotatifs 52 comprennent un outil émulsionneur 53, un outil de mélange 54, un outil couteau denté 55 et un outil couteau coupant 56.

L'appareil électroménager de préparation culinaire chauffant illustré sur les figures comporte un dispositif d'entraînement 99 pour entraîner en rotation le moyeu 51 disposé dans le récipient de travail 2 selon un axe de rotation 58.

La partie supérieure 7 ferme le récipient de travail 2. Si désiré la partie supérieure 7 peut présenter une ou plusieurs ouvertures, notamment pour introduire des aliments et/ou pour laisser échapper de la vapeur. En alternative ou en complément, la partie supérieure 7 peut ménager un échappement avec le récipient de travail 2, notamment pour laisser échapper de la vapeur.

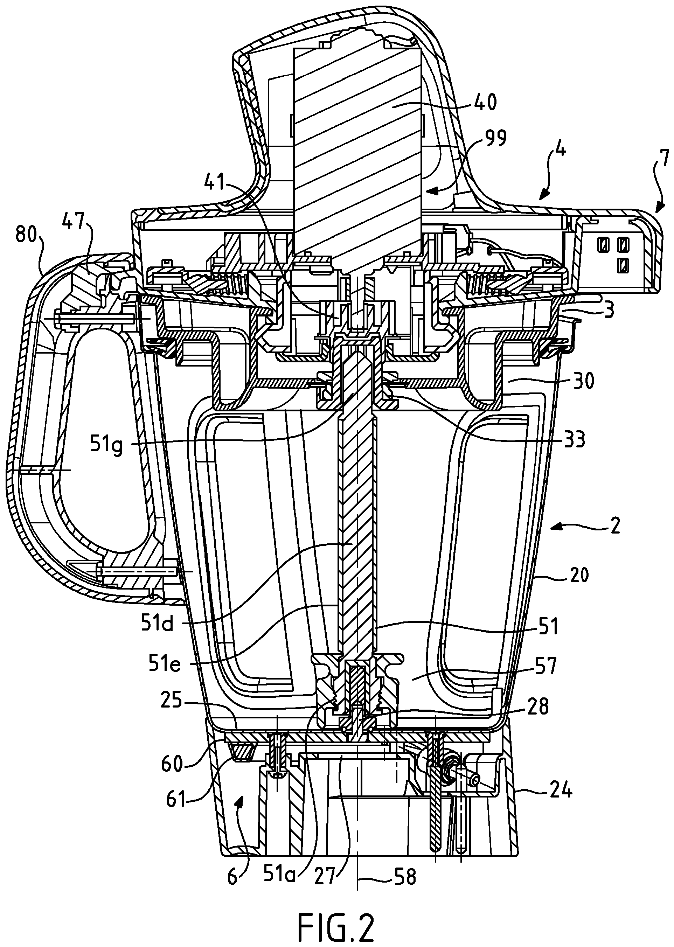

En configuration d'utilisation, l'appareil électroménager de préparation culinaire comporte un accessoire de travail rotatif 57 disposé dans le récipient de travail 2, tel que montré sur la figure 2. Chacun des outils de travail rotatifs 52 peut être monté sur le moyeu 51 pour former l'accessoire de travail rotatif 57.

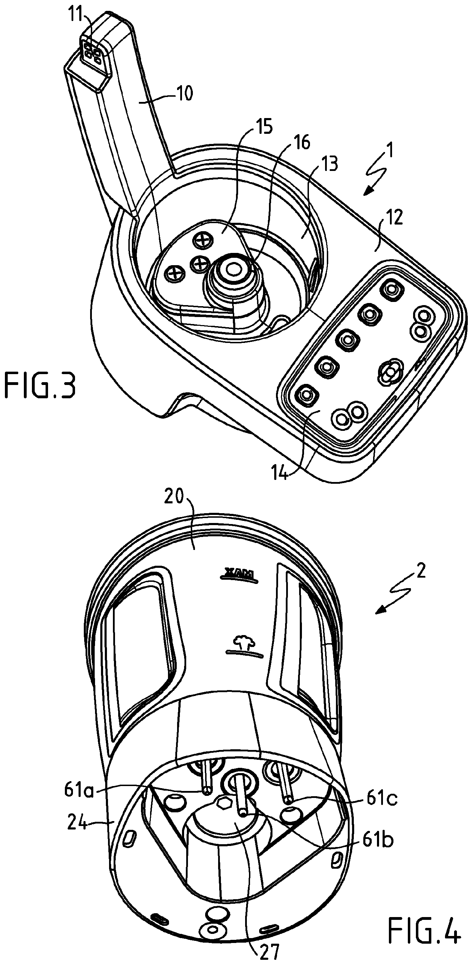

L'appareil électroménager de préparation culinaire chauffant illustré sur les figures comporte une base 1, mieux visible sur la figure 3. La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15 pour alimenter le dispositif de chauffe électrique 6 lorsque le récipient de travail 2 est disposé sur la base 1.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13.

Le récipient de travail 2 comporte un réceptacle 20 avantageusement réalisé en métal, de préférence en acier inoxydable. Le récipient de travail 2 comporte une poignée 80 montée sur le réceptacle 20, visible sur la figure 2. Le récipient de travail 2 présente un fond 25. Le récipient de travail 2 comporte un organe de centrage 28 s'élevant à partir du fond 25. Tel que visible sur la figure 2, le moyeu 51 est monté sur l'organe de centrage 28.

Dans l'exemple de réalisation illustré sur les figures, le récipient de travail 2 comporte une plaque de diffusion thermique 60 agencée sous le réceptacle 20, mieux visible sur la figure 2. La plaque de diffusion thermique 60 est avantageusement réalisée en aluminium. Le récipient de travail 2 comporte une embase 24 prévue pour reposer sur la base 1. L'embase 24 est montée sous le réceptacle 20. L'embase 24 est engagée dans l'empreinte 13 lorsque le récipient de travail 2 est en place sur la base 1.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 4, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60. Les broches inférieures 61a, 61b, 61c sont alimentées par le connecteur électrique de chauffe 15.

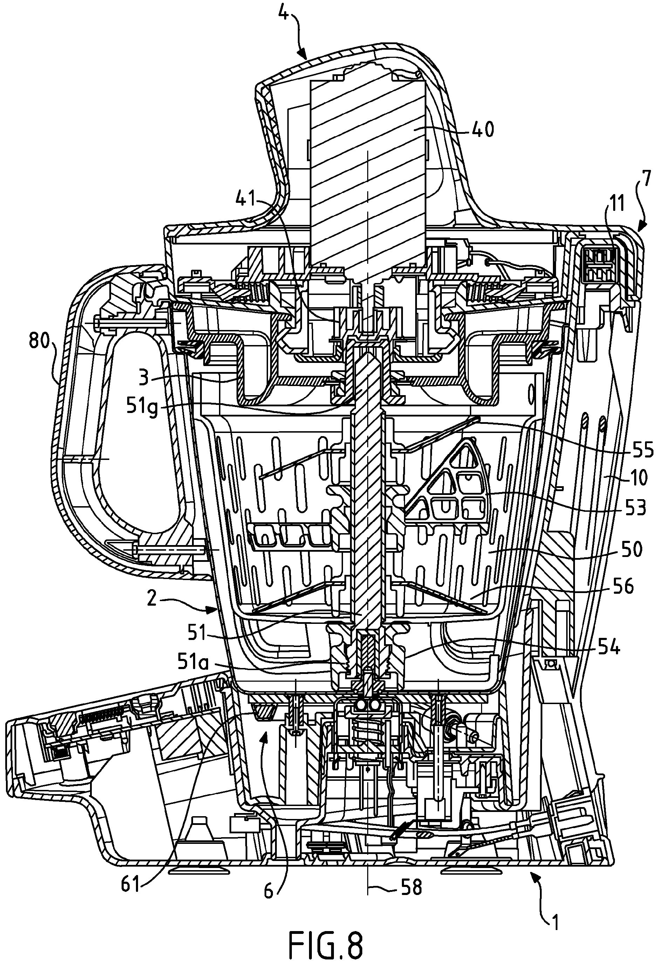

Tel que visible sur les figures 2 et 4, l'embase 24 présente une ouverture 27 laissant apparaître le fond 25. L'ouverture 27 est prévue pour le passage du capteur 16. Tel que visible sur la figure 8, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

Dans l'exemple de réalisation illustré sur les figures, le dispositif d'entraînement 99 est agencé dans la partie supérieure 7. A cet effet, la partie supérieure 7 comporte un boîtier motorisé supérieur 4. Plus particulièrement, la partie supérieure 7 comporte un couvercle intermédiaire 3. Le couvercle intermédiaire 3 comporte un corps 30 s'étendant autour de l'axe de rotation 58.

Dans l'exemple de réalisation illustré sur les figures, la base 1 comporte un montant 10 présentant un connecteur électrique de motorisation 11 pour alimenter le boîtier motorisé supérieur 4. Plus particulièrement, le connecteur électrique de motorisation 11 est agencé latéralement dans le montant 10. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation le moyeu 51 disposé dans le récipient de travail 2. A titre de variante, le boîtier motorisé supérieur 4 pourrait directement entraîner en rotation le moyeu 51, le couvercle intermédiaire 3 présentant alors un passage axial libre.

Le boîtier motorisé supérieur 4 loge un moteur électrique 40 entraînant un réducteur 41 prévu pour entraîner le moyeu 51 par l'intermédiaire de l'organe de transmission rotatif 33 du couvercle intermédiaire 3, tel que visible sur la figure 2.

Le boîtier motorisé supérieur 4 comporte une patte de verrouillage 47 prévue pour être bloquée dans la poignée 80 lorsque le boîtier motorisé supérieur 4 est tourné sur le récipient de travail 2.

Tel que visible sur la figure 2, le boîtier motorisé supérieur 4 est disposé sur le récipient de travail 2 pour entraîner en rotation le moyeu 51 selon l'axe de rotation 58. Le récipient de travail 2 porte le couvercle intermédiaire 3. Le couvercle intermédiaire 3 porte le boîtier motorisé supérieur 4.

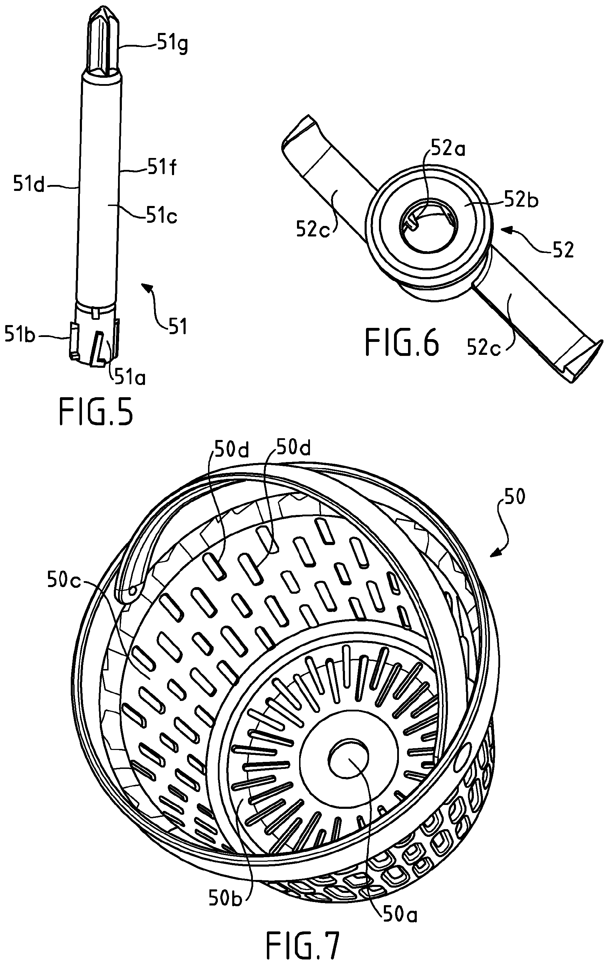

Le moyeu 51 comporte une portion d'entraînement 51a prévue pour entraîner en rotation l'un des outils de travail rotatifs 52 monté sur le moyeu sous le panier vapeur 50. En d'autres termes, ledit outil de travail rotatif 52 est monté sur le moyeu entre le fond du récipient de travail 2 et le fond du panier vapeur 50. Tel que visible sur la figure 5, la portion d'entraînement 51a appartient à une partie inférieure du moyeu 51. Les outils de travail rotatifs 52 présentent un organe entraîneur 52a avantageusement logé à l'intérieur d'une couronne 52b portant le ou les organes de travail 52c, tel que visible sur la figure 6. Le moyeu 51 traverse la couronne 52b. La portion d'entraînement 51a présente un organe d'entraînement 51b prévu pour entraîner en rotation l'organe entraîneur 52a de l'outil de travail rotatif 52 monté sur le moyeu 51.

Le moyeu 51 comporte une portion de réception 51c surmontant la portion d'entraînement 51a. Dans l'exemple de réalisation illustré sur les figures, la portion de réception 51c est dépourvue d'organe d'entraînement susceptible d'entraîner en rotation ledit outil de travail rotatif 52. Plus particulièrement, la portion de réception 51c est une portion cylindrique 51f.

Dans l'exemple de réalisation illustré sur les figures, le moyeu 51 comporte une portion de transmission 51g surmontant la portion de réception 51c. La portion de transmission 51g est prévue pour être entraînée par le boîtier motorisé supérieur 4 par l'intermédiaire de l'organe de transmission rotatif 33.

Selon une construction avantageuse, le moyeu 51 présente un corps principal 51d formant la portion d'entraînement 51a et la portion de transmission 51g. Tel que visible sur la figure 2, le moyeu 51 présente une partie circonférentielle 51e surmoulée autour du corps principal 51d au dessus de la portion d'entraînement 51a et en dessous de la portion de transmission 51g. La partie circonférentielle 51e forme la portion cylindrique 51f.

Tel que mieux visible sur la figure 7, le panier vapeur 50 présente un passage axial 50a traversant un fond 50b. Le panier vapeur 50 est ajouré. Dans l'exemple de réalisation illustré sur la figure 7, le panier vapeur 50 présente une paroi latérale 50c issue du fond 50b. Le fond 50b et la paroi latérale 50c présentent des ouvertures allongées 50d. Le panier vapeur 50 est par exemple réalisé en matière plastique présentant une tenue en température suffisante pour supporter une utilisation dans une ambiance de production de vapeur. A titre de variante, le panier vapeur 50 pourrait notamment être réalisé en treillis métallique.

En configuration de rangement, les accessoires de préparation 5 peuvent être rangés dans le récipient de travail 2, tel que montré sur la figure 8.

Le panier vapeur 50 peut être disposé dans le récipient de travail 2 en configuration d'utilisation et en configuration de rangement. La portion d'entraînement 51a du moyeu 51 est prévue pour entraîner en rotation l'un des outils de travail rotatifs 52 disposé sous le panier vapeur 50 en place dans le récipient de travail 2. La portion de réception 51c du moyeu 51 s'étend à l'intérieur du panier vapeur 50 en place dans le récipient de travail 2.

Tel que visible sur les figures 2 et 8, le moyeu 51 traverse le panier vapeur 50 disposé dans le récipient de travail 2. La portion d'entraînement 51a s'étend sous le passage axial 50a. La portion de réception 51c s'étend au dessus du passage axial 50a. Ainsi la portion d'entraînement 51a s'étend sous le panier vapeur 50 lorsque le moyeu 51 et le panier vapeur 50 sont disposés dans le récipient de travail 2, tel que visible sur la figure 8. La portion de réception 51c s'étend à l'intérieur du panier vapeur 50 lorsque le moyeu 51 et le panier vapeur 50 sont disposés dans le récipient de travail 2, tel que visible sur la figure 8.

Au moins un autre des outils de travail rotatifs 52 peut être monté sur la portion de réception 51c du moyeu 51 s'étendant à l'intérieur du panier vapeur 50 disposé dans le récipient de travail 2 lorsque la partie supérieure 7 ferme le récipient de travail 2. Dans l'exemple de réalisation illustré sur les figures, l'organe entraîneur 52a est monté libre en rotation sur la portion de réception 51c lorsque ledit outil de travail rotatif 52 est monté sur le moyeu 51 dans le panier vapeur 50. Ainsi ledit outil de travail rotatif 52 n'est pas entraîné en rotation.

Plus particulièrement, tel que visible sur la figure 8, plusieurs outils de travail rotatifs 52 sont montés superposés dans le panier vapeur 50 sur la portion de réception 51c lorsque la partie supérieure 7 ferme le récipient de travail 2.

L'utilisateur peut ainsi ranger les différents outils de travail rotatifs 52 dans le récipient de travail 2 fermé par la partie supérieure 7, les outils de travail rotatifs 52 étant montés sur le moyeu 51, l'un des outils de travail rotatifs 52 (hormis l'outil émulsionneur 53 présentant une hauteur trop importante) étant disposé sous le panier vapeur 50, le ou les autres outils de travail rotatifs étant disposés dans le panier vapeur. Si désiré, au moins l'un des outils de travail rotatifs 52 peut s'étendre au dessus du panier vapeur 50.

A titre de variante, la partie supérieure 7 ne comporte pas nécessairement un couvercle intermédiaire 3. Le dispositif d'entraînement 99 n'est pas nécessairement agencé dans la partie supérieure 7. La partie supérieure 7 ne comporte pas nécessairement un boîtier motorisé supérieur 4. Le dispositif d'entraînement 99 peut notamment être agencé dans la base 1 recevant le récipient de travail 2, pour entraîner en rotation le moyeu 51.

A titre de variante, le dispositif de chauffe électrique 6 n'est pas nécessairement porté par le récipient de travail 2. Le dispositif de chauffe électrique 6 peut notamment être agencé dans la base 1.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant comportant une partie supérieure (7), un récipient de travail (2), un dispositif de chauffe électrique (6) pour chauffer les aliments contenus dans le récipient de travail (2), un panier vapeur (50) disposé dans le récipient de travail (2), un moyeu (51), un dispositif d'entraînement (99) pour entraîner en rotation le moyeu (51) disposé dans le récipient de travail (2) selon un axe de rotation (58), au moins deux outils de travail rotatifs (52), le moyeu (51) comportant une portion d'entraînement (51a) prévue pour entraîner en rotation l'un des outils de travail rotatifs (52) monté sur le moyeu (51) sous le panier vapeur (50), le moyeu (51) traversant le panier vapeur (50), le moyeu (51) présentant une portion de réception (51c) s'étendant à l'intérieur du panier vapeur (50), au moins un autre des outils de travail rotatifs (52) pouvant être monté sur la portion de réception (51c) lorsque la partie supérieure (7) ferme le récipient de travail (2), **caractérisé en ce que** lesdits au moins deux outils de travail rotatifs (52) sont interchangeables, et **en ce que** la portion de réception (51c) est dépourvue d'organe d'entraînement susceptible d'entraîner en rotation ledit outil de travail rotatif (52).

2. Appareil électroménager de préparation culinaire chauffant selon la revendication 1, **caractérisé en ce que** la portion de réception (51c) est une portion cylindrique (51f).

3. Appareil électroménager de préparation culinaire chauffant selon l'une des revendications 1 ou 2, **caractérisé en ce que** le moyeu (51) présente un corps principal (51d) comportant la portion d'entraînement (51a).

4. Appareil électroménager de préparation culinaire chauffant selon la revendication 3, **caractérisé en ce que** le moyeu (51) présente une partie circonférentielle (51e) surmoulée autour du corps principal (51d) au dessus de la portion d'entraînement (51a).

5. Appareil électroménager de préparation culinaire chauffant selon la revendication 2 et la revendication 4, **caractérisé en ce que** la partie circonférentielle (51e) forme la portion cylindrique (51f).

6. Appareil électroménager de préparation culinaire chauffant selon l'une des revendications 1 à 5, **caractérisé en ce que** plusieurs outils de travail rotatifs (52) sont montés superposés dans le panier vapeur (50) sur la portion de réception (51c) lorsque la partie supérieure (7) ferme le récipient de travail (2).

7. Appareil électroménager de préparation culinaire chauffant selon la revendication 6, **caractérisé en ce que** la portion de réception (51c) est dépourvue d'organe d'entraînement susceptible d'entraîner en rotation lesdits outils de travail rotatifs (52).

8. Appareil électroménager de préparation culinaire chauffant selon l'une des revendications 1 à 7, **caractérisé en ce que** la partie supérieure (7) comporte un boîtier motorisé supérieur (4) disposé sur le récipient de travail (2) pour entraîner en rotation le moyeu (51) selon l'axe de rotation (58).

9. Appareil électroménager de préparation culinaire chauffant selon l'une des revendications 1 à 8, **caractérisé en ce que** la partie supérieure (7) comporte un couvercle intermédiaire (3), et **en ce que** le récipient de travail (2) porte le couvercle intermédiaire (3).

10. Appareil électroménager de préparation culinaire chauffant selon la revendication 9, **caractérisé en ce que** le couvercle intermédiaire (3) porte un organe de transmission rotatif (33) entraîné en rotation par le boîtier motorisé supérieur (4) et entraînant en rotation le moyeu (51).

11. Appareil électroménager de préparation culinaire chauffant selon l'une des revendications 8 à 10, **caractérisé en ce que** le récipient de travail (2) présente un fond (25) et comporte un organe de centrage (28) s'élevant à partir du fond (25), et **en ce que** le moyeu (51) est monté sur l'organe de centrage (28).

12. Appareil électroménager de préparation culinaire chauffant selon l'une des revendications 1 à 11, **caractérisé en ce qu'**il comporte une base (1) recevant le récipient de travail (2).

13. Appareil électroménager de préparation culinaire chauffant selon la revendication 12, **caractérisé en ce que** le dispositif de chauffe électrique (6) est porté par le récipient de travail (2) et **en ce que** la base (1) comporte un connecteur électrique de chauffe (15) pour alimenter électriquement le dispositif de chauffe électrique (6) lorsque le récipient de travail (2) est disposé sur la base (1).

14. Appareil électroménager de préparation culinaire chauffant selon l'une des revendications 12 ou 13, **caractérisé en ce que** la base (1) comporte un montant (10) présentant un connecteur électrique de motorisation (11) pour alimenter électriquement le boîtier motorisé supérieur (4).

## Patentansprüche

1. Heizendes Elektrohaushaltsgerät zur Nahrungsmittelzubereitung, das einen oberen Teil (7), einen Arbeitsbehälter (2), eine elektrische Heizvorrichtung (6) zum Erhitzen der Nahrungsmittel, die in dem Arbeitsbehälter (2) enthalten sind, einen Dampfkorb (50), der in dem Arbeitsbehälter (2) angeordnet ist, eine Nabe (51), eine Antriebsvorrichtung (99) zum Antreiben in Drehung der Nabe (51), die in dem Arbeitsbehälter (2) gemäß einer Rotationsachse (58) angeordnet ist, mindestens zwei drehende Arbeitswerkzeuge (52) umfasst, wobei die Nabe (51) einen Antriebsabschnitt (51a) umfasst, der vorgesehen ist, um eines der drehenden Arbeitswerkzeuge (52), das auf die Nabe (51) unter dem Dampfkorb (50) montiert ist, in Drehung anzutreiben, wobei die Nabe (51) den Dampfkorb (50) durchquert, wobei die Nabe (51) einen Aufnahmeabschnitt (51c) aufweist, der sich in dem Inneren des Dampfkorbs (50) erstreckt, wobei mindestens ein anderes der drehenden Arbeitswerkzeuge (52) auf den Aufnahmeabschnitt (51c) montiert werden kann, wenn der obere Teil (7) den Arbeitsbehälter (2) verschließt, **dadurch gekennzeichnet, dass** die mindestens zwei drehenden Arbeitswerkzeuge (52) miteinander austauschbar sind, und dass der Aufnahmeabschnitt (51c) kein Antriebsorgan aufweist, das das drehende Arbeitswerkzeug (52) in Drehung antreiben könnte.

2. Heizendes Elektrohaushaltsgerät zur Nahrungsmittelzubereitung nach Anspruch 1, **dadurch gekennzeichnet, dass** der Aufnahmeabschnitt (51c) ein zylindrischer Abschnitt (51f) ist.

3. Heizendes Elektrohaushaltsgerät zur Nahrungsmittelzubereitung nach einem der Ansprüche 1 oder 2, **dadurch gekennzeichnet, dass** die Nabe (51) einen Hauptkörper (51d) aufweist, der den Antriebsabschnitt (51a) umfasst.

4. Heizendes Elektrohaushaltsgerät zur Nahrungsmittelzubereitung nach Anspruch 3, **dadurch gekennzeichnet, dass** die Nabe (51) einen umfänglichen Teil (51e) aufweist, der um den Hauptkörper (51d) oberhalb des Antriebsabschnitts (51a) abgeformt ist.

5. Heizendes Elektrohaushaltsgerät zur Nahrungsmittelzubereitung nach Anspruch 2 und Anspruch 4, **dadurch gekennzeichnet, dass** der umfängliche Teil (51e) den zylindrischen Abschnitt (51f) bildet.

6. Heizendes Elektrohaushaltsgerät zur Nahrungsmittelzubereitung nach einem der Ansprüche 1 bis 5, **dadurch gekennzeichnet, dass** mehrere drehende Arbeitswerkzeuge (52) in dem Dampfkorb (50) auf dem Aufnahmeabschnitt (51c) überlagert montiert sind, wenn der obere Teil (7) den Arbeitsbehälter (2) verschließt.

7. Heizendes Elektrohaushaltsgerät zur Nahrungsmittelzubereitung nach Anspruch 6, **dadurch gekennzeichnet, dass** der Aufnahmeabschnitt (51c) kein Antriebsorgan aufweist, das die drehenden Arbeitswerkzeuge (52) in Drehung antreiben könnte.

8. Heizendes Elektrohaushaltsgerät zur Nahrungsmittelzubereitung nach einem der Ansprüche 1 bis 7, **dadurch gekennzeichnet, dass** der obere Teil (7) ein oberes motorisiertes Gehäuse (4) umfasst, das auf dem Arbeitsbehälter (2) angeordnet ist, um die Nabe (51) gemäß der Rotationsachse (58) anzutreiben.

9. Heizendes Elektrohaushaltsgerät zur Nahrungsmittelzubereitung nach einem der Ansprüche 1 bis 8, **dadurch gekennzeichnet, dass** der obere Teil (7) einen Zwischendeckel (3) umfasst, und dass der Arbeitsbehälter (2) den Zwischendeckel (3) trägt.

10. Heizendes Elektrohaushaltsgerät zur Nahrungsmittelzubereitung nach Anspruch 9, **dadurch gekennzeichnet, dass** der Zwischendeckel (3) ein drehendes Übertragungsorgan (33) trägt, das von dem oberen motorisierten Gehäuse (4) in Drehung angetrieben ist und die Nabe (51) in Drehung antreibt.

11. Heizendes Elektrohaushaltsgerät zur Nahrungsmittelzubereitung nach einem der Ansprüche 8 bis 10, **dadurch gekennzeichnet, dass** der Arbeitsbehälter (2) einen Boden (25) aufweist, und ein Zentrierorgan (28) umfasst, das ausgehend von dem Boden (25) hochragt, und dass die Nabe (51) auf dem Zentrierorgan (28) montiert ist.

12. Heizendes Elektrohaushaltsgerät zur Nahrungsmittelzubereitung nach einem der Ansprüche 1 bis 11, **dadurch gekennzeichnet, dass** es eine Basis (1), die den Arbeitsbehälter (2) aufnimmt, umfasst.

13. Heizendes Elektrohaushaltsgerät zur Nahrungsmittelzubereitung nach Anspruch 12, **dadurch gekennzeichnet, dass** die elektrische Heizvorrichtung (6) von dem Arbeitsbehälter (2) getragen wird, und dass die Basis (1) einen elektrischen Heizsteckverbinder (15) umfasst, um die elektrische Heizvorrichtung (6) elektrisch zu versorgen, wenn der Arbeitsbehälter (2) auf der Basis (1) angeordnet ist.

14. Heizendes Elektrohaushaltsgerät zur Nahrungsmittelzubereitung nach einem der Ansprüche 12 oder 13, **dadurch gekennzeichnet, dass** die Basis (1) einen Ständer (10) umfasst, der einen elektrischen Motorisierungsteckverbinder (11) zum elektrischen Versorgen des oberen motorisierten Gehäuses (4) aufweist.

## Claims

1. Electrical household heating food-preparation appliance comprising a top portion (7), a working vessel (2), an electrical heating device (6) for heating foods contained in the working vessel (2), a steamer basket (50) disposed in the working vessel (2), a hub (51), a drive device (99) for rotating the hub (51) disposed in the working vessel (2) about an axis of rotation (58), at least two rotary working tools (52), the hub (51) comprising a drive portion (51a) provided to rotate one of the rotary working tools (52) mounted on the hub (51) under the steamer basket (50), the hub (51) passing through the steamer basket (50), the hub (51) having a receiving portion (51c) extending into the steamer basket (50), at least one other of the rotary working tools (52) being capable of being mounted on the receiving portion (51c) when the top portion (7) closes the working vessel (2), **characterised in that** said at least two rotary working tools (52) are interchangeable, and **in that** the receiving portion (51c) has no drive member which can rotate said rotary working tool (52).

2. Electrical household heating food-preparation appliance according to claim 1, **characterised in that** the receiving portion (51c) is a cylindrical portion (51f).

3. Electrical household heating food-preparation appliance according to one of claims 1 or 2, **characterised in that** the hub (51) has a main body (51d) comprising the drive portion (51a).

4. Electrical household heating food-preparation appliance according to claim 3, **characterised in that** the hub (51) has a circumferential portion (51e) overmoulded around the main body (51d) above the drive portion (51a).

5. Electrical household heating food-preparation appliance according to claim 2 and claim 4, **characterised in that** the circumferential portion (51e) forms the cylindrical portion (51f).

6. Electrical household heating food-preparation appliance according to one of claims 1 to 5, **characterised in that** several rotary working tools (52) are mounted superposed in the steamer basket (50) on the receiving portion (51c) when the top portion (7) closes the working vessel (2).

7. Electrical household heating food-preparation appliance according to claim 6, **characterised in that** the receiving portion (51c) has no drive member which can rotate said rotary working tools (52).

8. Electrical household heating food-preparation appliance according to one of claims 1 to 7, **characterised in that** the upper portion (7) comprises a top motorised housing (4) disposed on the working vessel (2) to rotate the hub (51) about the axis of rotation (58).

9. Electrical household heating food-preparation appliance according to one of claims 1 to 8, **characterised in that** the upper portion (7) comprises an intermediate cover (3), and **in that** the working vessel (2) carries the intermediate cover (3).

10. Electrical household heating food-preparation appliance according to claim 9, **characterised in that** the intermediate cover (3) carries a rotary transmission member (33) rotated by the top motorised housing (4) and rotating the hub (51).

11. Electrical household heating food-preparation appliance according to one of claims 8 to 10, **characterised in that** the working vessel (2) has a bottom (25) and comprises a centring member (28) rising from the bottom (25), and **in that** the hub (51) is mounted on the centring member (28).

12. Electrical household heating food-preparation appliance according to one of claims 1 to 11, **characterised in that** it comprises a base (1) receiving the working vessel (2).

13. Electrical household heating food-preparation appliance according to claim 12, **characterised in that** the electrical heating device (6) is carried by the working vessel (2) and **in that** the base (1) comprises an electrical heating connector (15) to supply power to the electrical heating device (6) when the working vessel (2) is disposed on the base (1).

14. Electrical household heating food-preparation appliance according to one of claims 12 or 13, **characterised in that** the base (1) comprises an upright (10) having a motor electrical connector (11) to supply power to the top motorised housing (4).
